# EUROPÄISCHE PATENTSCHRIFT

(11) **EP 1 886 761 B1**
(45) Veröffentlichungstag und Bekanntmachung des Hinweises auf die Patenterteilung: **31.03.2010**
(21) Anmeldenummer: 07014875.4
(22) Anmeldetag: 30.07.2007
(51) Int. Cl.: B23Q 1/62, B29C 65/20

(54) **Niederhalter mit einem linearem Stelltrieb**
Retainer device with a linear actuator
Dispositif de maintien avec un moteur linéaire

(30) Priorität: 10.08.2006 DE 102006037624
(43) Veröffentlichungstag der Anmeldung: 13.02.2008
(73) Patentinhaber: Urban GmbH & Co. Maschinenbau KG, 87700 Memmingen (DE)
(72) Erfinder:
(74) Vertreter: Schulz, Manfred

(56) Entgegenhaltungen:
- EP-A1- 0 972 608
- DE-A1- 2 513 620
- DE-A1- 4 029 619
- DE-A1- 19 611 467

## Beschreibung

Die Erfindung bezieht sich auf einen Niederhalter mit einem linearen Stelltrieb mit einer Linearführung, die einen Schlitten führt, wobei der Schlitten mittels eines Linearantriebs verfahrbar ist.

Es ist bekannt, insbesondere bei Kunststoffprofilrahmen-Verschweißmaschinen in einer Linearführung verfahrbare Schlitten einzusetzen. Diese Schlitten werden mittels eines Linearantriebs zwischen verschiedenen Positionen verfahren. Um möglichst ressourcenschonende, das heißt bauteilsparende bekannte Stelltriebe aufzubauen, befindet sich der Linearantrieb in derselben Verfahrrichtung oder in verlängerter Richtung des Schlittens an der Linearführung angeordnet.

Bei bestimmten Anwendungen ist es jedoch von Nachteil, derartig lange Linearantriebe einzusetzen.

Aus dem Stand der Technik ist eine pneumatische Antriebsvorrichtung bekannt, die einen verschiebbar geführten Schlitten aufweist, an dem an zwei entgegengesetzten Seiten wenigstens zwei Zuggestänge abgehen, die mit einem Antriebskolben des pneumatischen Linearantriebes verbunden sind. Die Antriebsrichtung der Antriebskolben ist linear in gleicher Richtung zu der Bewegung des Schlittens vorgesehen.

Es ist weiterhin ein Linearbetrieb bekannt, bei dem die Antriebswelle des Antriebsmotors rechtwinklig zu dem eigentlichen antreibenden Mittel, nämlich einem Zahnriemen, vorgesehen ist. Der Zahnriemen ist dann geradlinig genau in der Richtung bewegbar, in der auch der bewegende Schlitten sich bewegt. Es handelt sich demnach um Linearantriebe, wie im Stand der Technik weiter oben beschrieben. Ähnliche Stelltriebe sind z.B. aus dem Dokument EP-A-0 496 046 bekannt.

Die europäische Patentanmeldung EP 0 972 608 offenbart einen Stellantrieb mit einer Linearführung, die einen Schlitten führt, wobei der Schlitten mittels eines Linearantriebs verfahrbar ist und zwischen Linearantrieb und Schlitten ein Weg-Richtungs-Wandler vorgesehen ist. Der Schlitten wird beispielsweise bei Bewegung des Linearantriebs in eine Richtung um 90° zur Richtung des Linearantrieb bewegt.

Es ist Aufgabe der vorliegenden Erfindung, einen möglichst kompakten linearen Stelltrieb zu schaffen, der sehr variabel hinsichtlich der Maße verbaubar ist.

Die Aufgabe wird durch die Merkmale von Anspruch 1 gelöst.

Der Wegrichtungswandler schafft einen variablen Einsatz des Linearantriebs, abhängig vom vorhandenen, verbaubaren Raum, so daß eine Festlegung des Linearantriebs parallel zur Linearführung nicht mehr erforderlich ist. Geschickterweise wird dabei der Wegrichtungswandler zum Beispiel über (oder unter) der Linearführung angeordnet, wodurch eine kompakte Bauweise resultiert. Der Wegrichtungswandler leistet eine Umlenkung der Bewegung des Linearantriebes, die Bewegungsrichtung des Linearantriebes kann dabei so angeordnet werden, dass er platzmäßig nicht stört. Bei entsprechender Ausgestaltung ist es grundsätzlich auch möglich, dass der Wegrichtungswandler auch eine entsprechende räumliche Distanz zwischen dem Schlitten und dem Linearantrieb überbrückt, also der Linearantrieb zum Beispiel im Bereich angeordnet ist, wo diese weniger stören.

Anders als bei den im Stand der Technik bekannten Lösungen erfolgt nach der Erfindung durch den Wegrichtungswandler eine Veränderung der Bewegungsrichtung des Verbindungsmittels zwischen dem Antrieb, z. B. einem hydraulischen oder pneumatischen Zylinder, und dem Schlitten selbst, der auf einer Linearführung geführt ist. Beim Stand der Technik sind die Antriebsmittel, beispielsweise Zahnriemen oder Gestänge, genau in Richtung der Bewegungsrichtung des Schlittens vorgesehen. Dadurch wird ein unnötig großer Platzbedarf notwendig, der durch die Lösung nach der Erfindung nicht mehr erforderlich ist. Hier können jetzt die entsprechenden Bestandteile des linearen Stellantriebes so angeordnet werden, dass eine platzsparende Anordnung ermöglicht ist.

Bevorzugt schließt die Wirkungsrichtung des Linearantriebs und die Ausrichtung der Linearführung einen Winkel (α) von größer 0°, bevorzugt 90°, ein und der Wegrichtungswandler bewirkt eine Umlenkung der Bewegung des Linearantriebs, um den Winkel (α).

Somit wird eine auszuführende Hubbewegung des Schlittens von einem 90° dazu angeordneten Linearantrieb ausgeführt. Die Länge des Stelltriebs verkürzt sich erheblich, da der Linearantrieb um 90° zur Schlittenbewegung abgeknickt ist. Dies ist vorteilhaft, da bei einer horizontalen Bewegung des Schlittens der Linearantrieb sich in vertikaler Richtung bewegen kann. Bauraum in vertikaler Richtung ist beispielsweise bei Kunststoffprofilrahmen-Verschweißmaschinen ausreichend vorhanden und meist ungenutzt.

Zur Kraftübertragung weist der Wegrichtungswandler eine Übertragungsvorrichtung auf, die Druckbelastungen und/oder Zugbelastungen vom Linearantrieb auf den Schlitten überträgt. Die Übertragungsvorrichtung können Schwenkhebel sein, die um 90° zueinander angeordnet sind und gegebenenfalls in einer Kulissenführung Schieber aufweisen, um radiale Längendifferenzen auszugleichen.

Gemäß der Erfindung kann die Übertragungsvorrichtung um den einzuschließenden Winkel (α) kontinuierlich im Verfahrbetrieb des Schlittens aus einer geraden Lage in eine gebogene Lage gekrümmt und dann wieder gerade gebogen werden.

Bei einer bevorzugten Ausführungsform umfaßt die Übertragungsvorrichtung eine geführte Kette, deren Anfangsglied mit dem Linearantrieb und deren Endglied mit dem Schlitten verbunden ist. Eine derart geführte Kette ist eine preiswerte und flexibel einsetzbare Übertragungsvorrichtung, die sowohl Zug- als auch Druckbelastungen ausführen kann. Sie ist preiswert, da dieses Maschinenelement standardisiert ist.

Bei einer alternativen Ausführungsform umfaßt die Übertragungsvorrichtung Kugeln oder Zylinder, die zwangsgeführt sind und es ist eine Gegenkraftvorrichtung vorgesehen, die eine auf den Schlitten und/oder die Übertragungsvorrichtung ausgebildete Gegenzugbelastung erzeugt. Ein wesentlicher Vorteil der Ausgestaltung in einzelnen zueinander nicht verketteten Kugeln oder Zylinder als Übertragungsvorrichtung ist, dass für diesen auch verhältnismäßig enge Abwinkelungen realisiert werden können und eine entsprechende Bewegungskraft zu übertragen ist.

Ein preiswerter Linearantrieb ist ein pneumatisch oder hydraulisch betriebener Arbeitszylinder. Natürlich sind erfindungsgemäß auch andere Linearantriebe, zum Beispiel Elektromotoren, Zahnstangen usw., einsetzbar.

Um die Reibung zwischen der Übertragungsvorrichtung und dem Wegrichtungswandler auf ein Minimum zu reduzieren, umfaßt der Wegrichtungswandler eine geschwungene, insbesondere S-förmige Führung. Somit werden die Zug- und Druckkräfte im wesentlichen in Wirkrichtung gehalten und ein Verkanten oder Blockieren vermieden. Die Führung des Wegrichtungswandlers weist Nuten auf, in denen die Übertragungsvorrichtung zwangsgeführt ist. Die Übertragungsvorrichtung hat in diesen Nuten ein insbesondere kleines Spiel.

In einer bevorzugten Ausführungsform weist die Führung gegenüberliegende, parallele, zentrierte Hervorhebungen auf, um insbesondere eine Kette zwangsgeführt und mit geringem Spiel in der Führung des Wegrichtungswandlers zu halten und eine zentrierte Führung zu ermöglichen, so dass an einer offenen Seite der Schlitten angelenkt und verfahren werden kann.

Die Aufgabe wird auch bei einem Niederhalter für eine Kunststoffprofilrahmen-Verschweißmaschine mit einem Kunststoffprofilniederhalter dadurch gelöst, daß ein Stelltrieb mit oben beschriebenen Merkmalen an dem Niederhalter montiert ist.

Vorzugsweise ist am Schlitten ein rechtwinklig zur Bewegungsrichtung des Schlittens, insbesondere vertikal verfahrbarer Linearantrieb, insbesondere ein Hubzylinder, mit einem Dichtungsniederhalter am Linearantrieb angeordnet. Somit ist ein kompakter Niederhalter geschaffen, der insbesondere in die Höhe gebaut ist und einen minimalen Längenbedarf, nämlich im wesentlichen die verfahrbare Länge des Schlittens für den Dichtungsniederhalter aufweist.

Um einen Kunststoffprofilrahmen möglichst umfassend herabdrücken zu können, weist der Niederhalter im Profilstückniederhalter ein Langloch auf, in dem der Dichtungsniederhalter zur Linearführung berührungsfrei verfahrbar ist.

Eine erfindungsgemäße Profilrahmen-Verschweißmaschine weist jeweils zwei zu einer Schweißvorrichtung spiegelbildlich angeordnete gegenüberliegende Niederhalter mit oben beschriebenen Merkmalen auf.

Es versteht sich, daß die vorstehend genannten und nachstehend noch zu erläuternden Merkmale nicht nur in der jeweils angegebenen Kombination, sondern auch in anderen Kombinationen verwendbar sind.

Die Erfindung wird anhand eines Ausführungsbeispiels unter Bezugnahme auf zwei dazugehörige Zeichnungen näher erläutert.

Es zeigen:
- Fig. 1: eine perspektivische Ansicht eines erfindungsgemäßen linearen Stelltriebs an einem Niederhalter und
- Fig. 2: eine perspektivische Ansicht von zwei spiegelbildlich angeordneten Niederhaltern für eine Kunststoffprofilrahmen-Verschweißmaschine

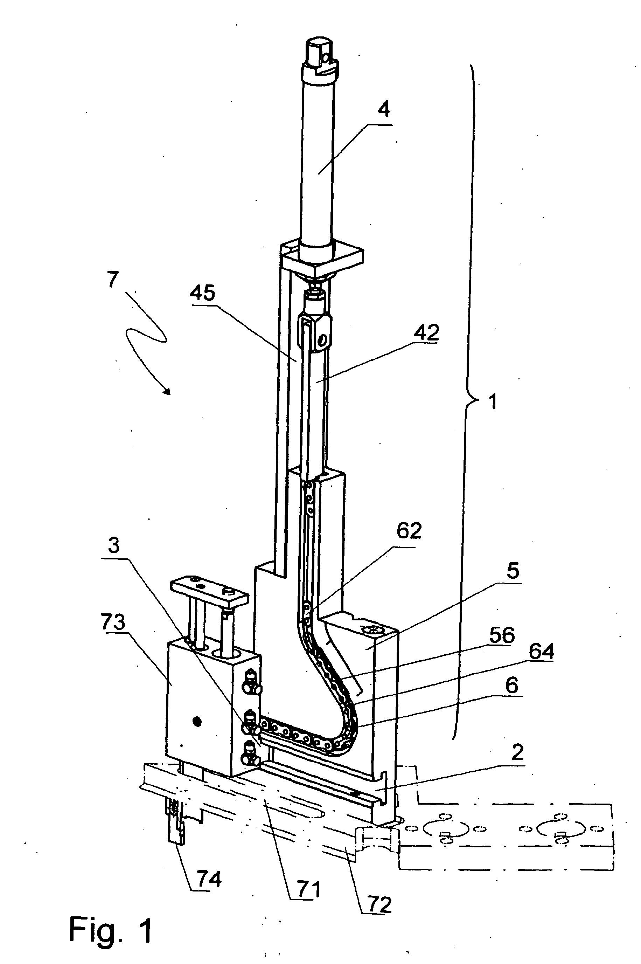

Die Fig. 1 zeigt in perspektivischer Ansicht einen erfindungsgemäßen linearen Stelltrieb 1. Der Stelltrieb 1 weist eine Linearführung 2 auf, in der ein Schlitten 3 verfahrbar gelagert ist. Der Schlitten 3 wird mittels eines Linearantriebs 4 in mindestens zwei verschiedene Positionen verfahren. Zwischen dem Linearantrieb 4 und dem Schlitten 3 ist ein Wegrichtungswandler 5 in der Wirkverbindung zu diesen eingebaut. Der Linearantrieb 4 schließt zur Ausrichtung der Linearführung 2 einen Winkel α von 90° ein. Der Wegrichtungswandler 5 bewirkt die Umlenkung der Bewegung des Linearantriebs 4, um den Winkel α von 90°.

Der Wegrichtungswandler kann erfindungsgemäß jeden beliebigen Winkel α einschließen.

Der Wegrichtungswandler 5 umfaßt eine Übertragungsvorrichtung 6, die als Kette 64 ausgebildet ist. Das Anfangsglied 62 der Kette 64 ist mit einem Stab 42 des Linearantriebes 4 (z. B. der Kolbenstange eines Arbeitszylinders) verbunden und das Endglied der Kette 64 ist mit dem Schlitten 3 verbunden. Eine zwangsgeführte Kette 64 kann Zug und Druck in zwei Richtungen übertragen.

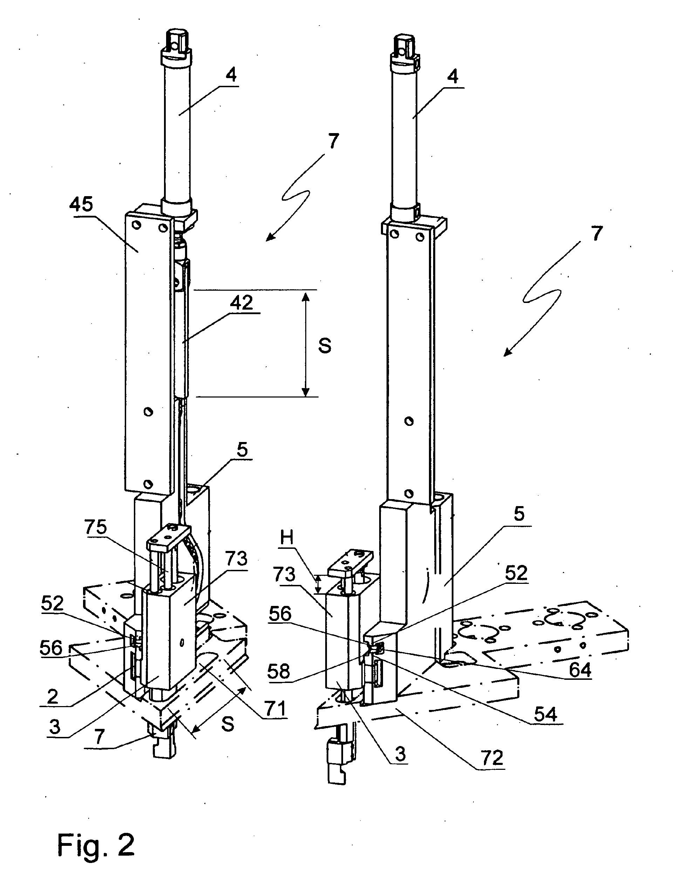

Als Linearantrieb 4 ist ein pneumatischer Arbeitszylinder vorgesehen. Um einen größeren Weg ausführen zu können und eine kompakte Bauweise zu erreichen, ist eine Führung 56 im Wegrichtungswandler 5 leicht S-förmig ausgebildet. Wie die Fig. 2 zeigt, weist die Führung 56 gegenüberliegende, parallele, zentrierte Hervorhebungen 52, 54 auf, die von Nuten 58 abgesetzt sind, um die Kette 64 zwangsgeführt mit einem kleinen Spiel zu leiten. Die Hervorhebungen 52, 54 und die Nuten 58 führen die Kette 64 in seitlicher Richtung, da die Führung 56 des Wegrichtungswandlers 5 zur Seite des Schlittens 3 hin offen ist, um den Schlitten 3 am Endglied der Kette anlenken zu können und verfahren zu können.

Um einen in der Fig. 2 eingezeichneten Bewegungshub S des Arbeitszylinders 4 ausführen zu können, ist der Arbeitszylinder 4 vom Wegrichtungswandler 5 mittels eines Flachstabs 45 von diesem beabstandet angeordnet.

Mit dem Schlitten 3 ist bevorzugt einstückig ein weiterer vertikal angeordneter Hubzylinder 73 ausgebildet, um einen Dichtungsniederhalter 74 in vertikaler Richtung betätigen zu können. Der Dichtungsniederhalter 74 hält eine nicht gezeigte Dichtung in einer Eckverbindung beim Zusammenschweißvorgang zweier nicht dargestellter Kunststoffprofile nieder.

Eines dieser Kunststoffprofilstücke wird mittels eines plattenförmig ausgebildeten Profilstückniederhalters 72 auf eine Maschinenauflage gedrückt. Auf dem Profilstückniederhalter 72 ist der lineare Stelltrieb 1 aufgebaut, indem der Wegrichtungswandler 5 mit dem Profilstückniederhalter 72 beispielsweise durch eine Schraubverbindung befestigt ist. Der Profilstückniederhalter 72 weist zudem ein Langloch 71 auf, in dem der Dichtungsniederhalter 74 berührungsfrei parallel zur Linearführung 2 verfahrbar ist.

Die Fig. 2 zeigt in perspektivischer Ansicht zwei spiegelbildlich angeordnete Niederhalter 7, welche beispielsweise in einer nicht dargestellten Kunststoffprofilrahmen-Verschweißmaschine eingebaut sind. Dabei befinden sich die zu verschweißenden Flächen zwischen den Niederhaltern 7.

Die Fig. 2 zeigt insbesondere beim hinteren Niederhalter 7 die Zwangsführung der Kette 64 in der Führung 56 mit parallelen, gegenüberliegenden Hervorhebungen 52 und 54.

Der Hubzylinder 73 weist zudem Linearführungen 75 als parallel angeordnete Rundstäbe auf, damit der Dichtungsniederhalter 74 verdrehsicher bewegbar ist. Der Hubzylinder 73 führt bei Betätigung einen Hub H aus. Es ist somit ein kompakter linearer Stelltrieb 1 geschaffen worden, der einen vorhandenen Bauraum in der Höhe ausnutzt, während flächenmäßig die Maschinenabmessungen minimiert sind.

## Patentansprüche

1. Niederhalter für eine Kunstoffprofilrahmenverschweißmaschine mit einem Profilstückniederhalter (72), auf dem ein linearer Stelltrieb montiert ist, wobei der lineare Stelltrieb (1) eine Linearführung (2), die einen Schlitten (3) führt, aufweist, wobei der Schlitten (3) mittels eines Linearantriebs (4) verfahrbar ist, wobei zwischen Linearantrieb (4) und Schlitten (3) ein Wegrichtungswandler (5) in Wirkverbindung zu diesen angeordnet ist, wobei der Wegrichtungswandler (5) eine in einer geschwungenen Führung (56) verlaufende, flexible Kraftübertragungsvorrichtung (6), insbesondere eine Kette (64), zur Herstellung der Wirkverbindung aufweist und die Führung (56) mindestens eine Nut (58) aufweist, in der die Kraftübertragungsvorrichtung (6) mit einem kleinen Spiel zwangsgeführt ist.

2. Niederhalter nach Anspruch 1, **dadurch gekennzeichnet, dass** die Wirkungsrichtung des Linearantriebs (4) und die Ausrichtung der Linearführung (2) einen Winkel (α) größer als 0°, bevorzugt 90°, einschießt, und der Wegrichtungswandler (5) eine Umlenkung der Bewegung des Linearantriebes um den Winkel (a) bewirkt.

3. Niederhalter nach einem der vorhergehenden Ansprüche, **dadurch gekennzeichnet, dass** die Kraftübertragungsvorrichtung Druckbelastungen (6) und/oder Zugbelastungen vom Linearantrieb auf den Schlittten überträgt.

4. Niederhalter nach einem der vorhergehenden Ansprüche, **dadurch gekennzeichnet, dass** die Kraftübertragungsvorrichtung (6) eine geführte Kette (64) umfasst, deren Anfangsglied mit dem Linearantrieb (4) verbunden ist und deren Endglied mit dem Schlitten (3) verbunden ist.

5. Niederhalter nach einem der vorhergehenden Ansprüche, **dadurch gekennzeichnet, dass** die Kraftübertragungsvorrichtung (6) Kugeln oder Zylinder umfasst, und eine Gegenkraftvorrichtung vorgesehen ist, die eine auf den Schlitten (3) und/oder die Kraftübertragungsvorrichtung (6) ausgebildete Gegenzugsbelastung erzeugt.

6. Niederhalter nach einem der vorhergehenden Ansprüche, **dadurch gekennzeichnet, dass** der Linearantrieb (4) ein pneumatisch oder hydraulisch betriebener Arbeitszylinder ist.

7. Niederhalter nach einem der vorhergehenden Ansprüche, **dadurch gekennzeichnet, dass** die geschwungene Führung (56) des Wegrichtungswandlers (5) zur Reduktion der Reibung von der Kraftübertragungsvorrichtung (6) eine S-förmige Führung ist.

8. Niederhalter nach einem der vorhergehenden Ansprüche, **dadurch gekennzeichnet, dass** die Führung (56) gegenüberliegende parallele Hervorhebungen (54) umfasst, die insbesondere eine Kette (64) zwangsgeführt und formschlüssig mit geringem Spiel halten.

9. Niederhalter nach Anspruch 1, **dadurch gekennzeichnet, dass** am Schlitten (3) ein rechtwinklig zur Bewegungsrichtung des Schlittens, insbesondere ein vertikal verfahrbarer Linearantrieb (73), insbesondere ein Hubzylinder, angeordnet ist, mit einem Dichtungsniederhalter (74) am Linearantrieb befestigt ist.

10. Niederhalter nach Anspruch 1, **dadurch gekennzeichnet, dass** der Niederhalter im Profilstückniederhalter (72) ein Langloch (71) aufweist, in dem der Dichtungsniederhalter (74) parallel zur Linearführung (2) berührungsfrei verfahrbar ist.

11. Profilrahmen-Verschweißmaschine mit jeweils zwei zu einer Schweißvorrichtung spiegelbildlich angeordneten gegenüberliegenden Niederhaltern (7) nach Anspruch 1.

## Claims

1. Holding-down appliance for a welding machine for synthetic profiles frames with a profile part holding-down appliance (72) on which a linear adjusting drive is mounted, wherein the linear adjusting drive (1) has a linear guide (2) guiding a slide (3), wherein the slide (3) can be shifted by means of a linear drive (4), wherein between linear drive (4) and slide (3) a path direction converter (5) is arranged in active connection to this, wherein the path direction converter (5) has a flexible power transmission device (6), in particular a chain (64), running in a curved guide (56) for producing the active connection, and the guide (56) has at least one groove (58) in which the power transmission device (6) is guided restrictedly with a small allowance.

2. Holding-down appliance according to claim 1, **characterised in that** the active direction of the linear drive (4) and the orientation of the linear guide (2) form an angle (α) larger than 0°, preferably 90°, and the path direction converter (5) effects a deviation of the movement of the linear drive by angle (α).

3. Holding-down appliance according to one of the preceding claims, **characterised in that** the power transmission device transmits pressure loads (6) and/or tensile loads from the linear drive to the slide.

4. Holding-down appliance according to one of the preceding claims, **characterised in that** the power transmission device (6) comprises a guided chain (64) the starting link of it being connected with the linear drive (4), and the final link of it being connected with the slide (3).

5. Holding-down appliance according to one of the preceding claims, **characterised in that** the power transmission device (6) comprises balls or cylinders, and a counter power device is provided which generates a counter tensile load formed on the slide (3) and/or the power transmission device (6).

6. Holding-down appliance according to one of the preceding claims, **characterised in that** the linear drive (4) is a pneumatically or hydraulically driven working cylinder.

7. Holding-down appliance according to one of the preceding claims, **characterised in that** the curved guide (56) of the path direction converter (5) for reducing the friction of the power transmission device (6) is a S-shaped guide.

8. Holding-down appliance according to one of the preceding claims, **characterised in that** the guide (56) comprises opposing parallel raisings (54) which in particular hold a chain (64) guided restrictedly and positive locking with little allowance.

9. Holding-down appliance according to claim 1, **characterised in that** at the slide (3) a linear drive (73), in particular a lifting cylinder, which can be shifted rectangular to the direction of movement of the slide, in particular vertically, is arranged, with a seal holding-down appliance (74) attached to the linear drive.

10. Holding-down appliance according to claim 1, **characterised in that** the holding-down appliance has in the profile part holding-down appliance (72) a long hole (71) in which the seal holding-down appliance (74) can be shifted parallel to the linear guide (2) contact-free.

11. Welding machine for profile frames with two opposing holding-down appliances (7) each arranged mirror-inverted to one welding device according to claim 1.

## Revendications

1. Système de serrage destiné à une machine de soudage de cadres formés de profilés en plastique comportant un dispositif de serrage de profilés (72) sur lequel est monté un moteur linéaire (1) possédant un guidage linéaire (2) pour un coulisseau (3) qui se déplace à l'aide d'un moteur linéaire (4) et d'un dispositif de déviation de force (5) situé entre le coulisseau (3) et le moteur linéaire (4) et agissant sur ces deux éléments en les reliant entre eux par un dispositif flexible de transmission de force (6), en particulier une chaîne (64), ce dispositif étant guidé à l'intérieur d'un guidage courbé (56) comportant au moins une gorge (58) à l'intérieur de laquelle ledit dispositif de transmission de force (6) est guidé de force et à faible jeu.

2. Système de serrage selon la revendication 1, **caractérisé en ce que** l'angle (α) formé entre l'orientation de l'action du moteur linéaire (4) et l'orientation du guidage linéaire (2) est supérieur à 0°, et de préférence de 90° et **en ce que** le dispositif de déviation de force (5) provoque un détournement du mouvement du moteur linéaire d'un angle (α).

3. Système de serrage selon une des revendications précédentes, **caractérisé en ce que** le dispositif de transmission de force (6) transmet des forces de pression et/ou des forces de traction du moteur linéaire au coulisseau.

4. Système de serrage selon une des revendications précédentes, **caractérisé en ce que** le dispositif de transmission de force (6) comporte une chaîne guidée (64) dont le premier maillon est fixé au moteur linéaire (4) et dont le dernier maillon est fixé au coulisseau (3).

5. Système de serrage selon une des revendications précédentes, **caractérisé en ce que** le dispositif de transmission de force (6) comporte des sphères ou des cylindres et **en ce qu'**il existe un contre dispositif de transmission de force agissant en contre-sens sur le coulisseau (3) et/ou sur le dispositif de transmission de force (6).

6. Système de serrage selon une des revendications précédentes, **caractérisé en ce que** le moteur linéaire (4) est un vérin pneumatique ou hydraulique.

7. Système de serrage selon une des revendications précédentes, **caractérisé en ce que** le guidage courbé (56) du dispositif de déviation de force (5) possède une forme en S afin de réduire la résistance de frottement du dispositif de transmission de force (6).

8. Système de serrage selon une des revendications précédentes, **caractérisé en ce que** le guidage (56) possède des rétrécissements parallèles et situés en regard permettant en particulier de guider une chaîne (64) à faible jeu par une liaison de force et de forme.

9. Système de serrage selon la revendication 1, **caractérisé en ce que** le coulisseau (3) possède un moteur linéaire (73) et en particulier un vérin de traction se déplaçant selon une direction perpendiculaire à la direction du mouvement du coulisseau et en particulier verticalement et sur lequel est fixé un dispositif de serrage de joint (74).

10. Système de serrage selon la revendication 1, **caractérisé en ce que** le dispositif de serrage des profilés (72) comporte un trou allongé (71) à l'intérieur duquel le dispositif de serrage de joint (74) peut être déplacé sans contact et parallèlement au guidage linéaire (2).

11. Machine de soudage de cadres en profilés comportant pour chacune des directions de soudage deux systèmes de serrage (7) selon la revendication 1, l'un inversé par rapport à l'autre et situés en regard l'un de l'autre.
